# EUROPEAN PATENT APPLICATION

(11) **EP 2 644 410 A2**
(43) Date of publication of application: **02.10.2013**
(21) Application number: 13160882.0
(22) Date of filing: 25.03.2013
(51) Int. Cl.: B60C 15/04, B60C 15/06

(54) **A bead structure for a tire**

(30) Priority: 26.03.2012 US 201213429520
(71) Applicant: The Goodyear Tire & Rubber Company, Akron, Ohio 44316 (US)
(72) Inventor: Maus, Peter Cornelius, B-4760 Bullingen (BE); Krier, Roland Willibrord, L-6622 Wasserbillig (LU)
(74) Representative: Kutsch, Bernd

(57) **Abstract**

A tire comprising a tread (20) extending circumferentially around an outer portion of the pneumatic tire, two sidewalls extending radially inward from the tread, a carcass ply (88) extending radially inward through each sidewall, and two annular bead portions (13) comprising a composite material comprising resin-impregnated fabric or fiber layers is disclosed. Also, a method of making a tire is disclosed, the method comprising: preparing a liquid component mixture comprising a resin, a hardener, an accelerator and fibers; and forming uncured bead portions and/or uncured apexes or an uncured integral structure using said liquid component.

## Description

### Field of Invention

The present invention relates to tires and, more specifically, to bead structures of tires such as pneumatic tires. The tires may be truck or passenger tires.

### Background of the present invention

The use of beads in tires is known for a long time. Such beads are made of a metal such as steel.

A challenge exists to provide a tire with a lighter and/or smaller bead to safe tire weight and cost.

The tire bead also contributes to the rolling resistance of the tire. Hence, there is a need provide a tire bead with improved rolling resistance of the tire.

### Summary of the Invention

The invention relates to a tire in accordance with claim 1 and to a method in accordance with claim 14. Dependent claims refer to preferred embodiments of the invention.

A pneumatic tire in accordance with a preferred aspect of the present invention includes a tread extending circumferentially around an outer portion of the pneumatic tire; two sidewalls extending radially inward from the tread; a carcass ply extending radially inward through each sidewall; two annular bead portions securing radially inner portions of the carcass ply; and two apexes extending radially outward from each bead portion. The bead portions include a composite material constructed of resin-impregnated fabric layers including a resin, a hardener, an accelerator, and fibers.

According to another preferred aspect of the tire, the fibers are glass fibers.

According to still another preferred aspect of the tire, the fibers are carbon fibers.

According to yet another preferred aspect of the tire, the fibers comprise both glass fibers and carbon fibers.

According to still another preferred aspect of the tire, the apexes comprise a composite material constructed of resin-impregnated fabric layers including a resin, a hardener, an accelerator, and fibers.

According to yet another preferred aspect of the tire, each bead portion comprises an integral structure with an associated apex.

According to still another preferred aspect of the tire, the uncured bead portions form a first liquid component mixture wherein for 0.1 kg resin between 0.012 kg and 0.018 kg hardener and between 0.003 kg and 0.007 kg accelerator is added.

According to yet another preferred aspect of the tire, the integral structure forms a first liquid component mixture having for a weight of 0.1 kg resin between 0.012 kg and 0.018 kg hardener and between 0.003 kg and 0.007 kg accelerator.

According to still another preferred aspect of the tire, the resin-impregnated fabric layers are manufactured into a final shape of the bead portions.

According to yet another preferred aspect of the tire, the resin-impregnated fabric layers are cut and placed one above the other into a mold that corresponds to the dimensions of the bead portions.

According to still another aspect of the tire, the fibers may have circular cross-sections.

According to yet another aspect of the tire, the fibers may have rectangular cross-sections.

According to still another aspect of the tire, the fibers may have triangular cross-sections.

According to yet another aspect of the tire, the fibers may be are oriented radially.

According to still another aspect of the tire, the fibers may be are oriented axially.

According to yet another aspect of the tire, the fibers may be are oriented circumferentially.

### Brief Descriptions of the Drawings

The invention will be described by way of example and with reference to the accompanying drawings in which:
FIG. 1 is a schematic cross-section view of an example tire for use with the present invention.
FIG. 2 is a schematic front elevation of the example tire of FIG. 1

### Definitions

"Axial" and "axially" means lines or directions that are parallel to the axis of rotation of the tire.

"Circumferential" means lines or directions extending along the perimeter of the surface of the annular tread perpendicular to the axial direction.

"Radially" and "radially" means directions radially toward or away from the axis of rotation of the tire.

### Detailed Description of an Example Embodiment

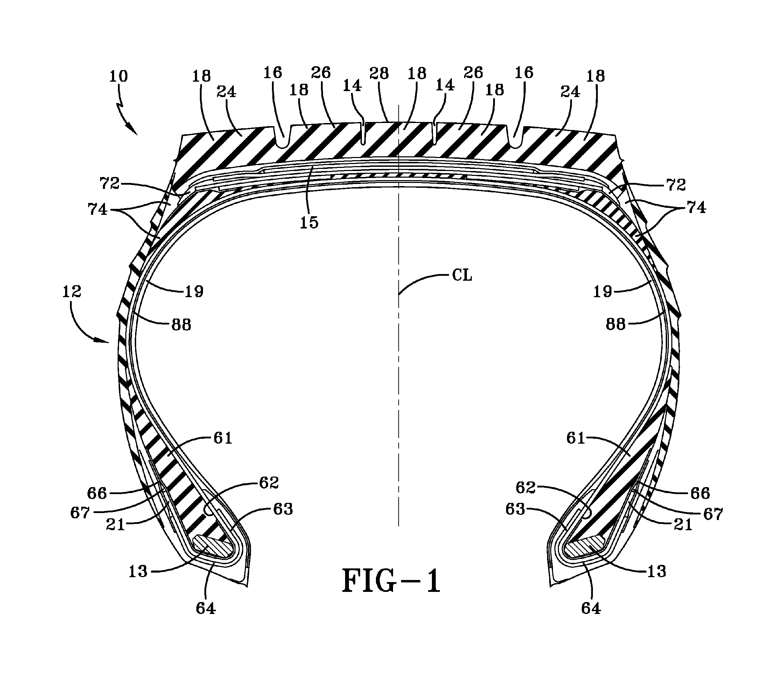

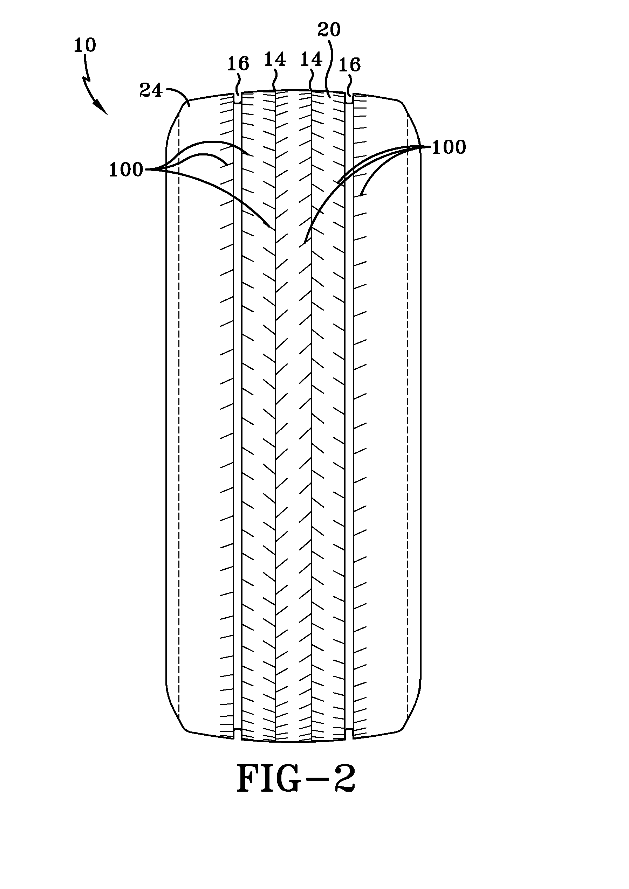

FIGS. 1 and 2 show an example tire 10 for use with the present invention. The tire 10 has a tread 20 and a casing 12. The casing 12 has two sidewalls, one or more radial plies 88 extending from, and wrapped about, two annular beads 13, and a belt reinforcement structure 15 located radially between the tread 20 and the ply or plies 88.

The plies 88 and the belt reinforcement structure 15 may be cord reinforced elastomeric material. The cords may be, for example, steel wire filaments and the elastomer may be, for example, a vulcanized rubber material. In prior art tires, the annular beads 13 have steel wires wrapped into a bundle forming an inextensible bead core. An innerliner component 19, for example a halobutyl rubber, may form a somewhat air impervious chamber to contain the air pressure when the tire 10 is inflated.

The tire 10 may further include an elastomeric apex 61 radially disposed above each bead 13. A turnup 21 of the ply 88 in each bead area may be reinforced with a flipper 62, a chipper 63, a gum and fabric chafer 64, a gum strip 66, and/or elastomeric wedges 67. Additionally, the belt reinforcement structure 15 may include a gum strip of rubber material 72 and/or a plurality of elastomeric strips or wedges 74 in the lateral extremes or edges of the belt reinforcement structure 15 in proximity of the lateral shoulders of the tread 20. Although not required to the practice of the inventive concept, these features are disclosed as features employed by an example embodiment.

The example tread 20 may have a predetermined non-skid depth and four circumferential grooves including two centerline grooves 14 and two shoulder grooves 16 that divide the tread 20 into five circumferential ribs 18. The shoulder grooves 16 may have a greater width than the centerline grooves 14 thereby mitigating groove cracking. The narrower centerline grooves 14 may optimize rolling resistance and pressure distribution throughout the tread 20. Laterally extending blind sipes 100 may extend at least partially across the five ribs 18 of the tread 20 to form five circumferentially extending ribs 18 including two shoulder ribs 24, two riding ribs 26, and a center rib 28. Further, one end of the blind sipes 100 may be enclosed within the edges of the ribs 18 for optimizing wetskid performance.

In accordance with the present invention, the beads 13 and/or apexes 61 comprise a fiber composite material constructed of resin-impregnated fiber or fabric layers. Accordingly, the beads 13 and/or apexes 61 comprise a resin, a hardener, an accelerator, and fibers of glass and/or carbon. For example, the uncured beads 13 and/or apexes 61 may form a first liquid component mixture having for a weight of 0.1 kg resin 0.012 kg to 0.018 kg hardener and 0.003 kg to 0.007 kg accelerator, or equivalent ratio. Each bead 13 and apex 61 may also be a single piece constructed in accordance with the present invention.

Further details about a usable first liquid component mixture and a respective fiber composite material are described in DE 10 2005 054 334 A1, see paragraphs 14 and 15 there, incorporated by reference to this specification.

The materials described in that document may be used as resin, hardener, accelerator and glass fibers in the embodiments here.

The beads 13 and/or apexes 61 accordingly are similar in composition to so called "Prepregs" used as springs and may be manufactured in the same way as such Prepregs. For further details, see paragraph 4 in DE 10 2005 054 334 A1.

A method of manufacturing such Prepregs which may be used to manufacture the beads 13 and/or apexes 61 in accordance with the invention is also described in DE 10 2006 052 137 A1.

Even though conventional steel beads are comparatively inexpensive to manufacture and reliable in operation, any innovation that can lighten a tire without detracting from performance in any other way is desirable for improving at least rolling resistance. Such fiber composite beads 13 and/or apexes 61 may be produced from resin-impregnated fiber layers.

These resin-impregnated fiber layers may be manufactured in the desired shape and/or cut and placed one above the other into a mold that corresponds to the dimensions of the beads 13 and/or apexes 61. Unfinished beads 13 and/or apexes 61 may be placed in the mold under the action of pressure and heat cured.

The resin-impregnated fibers and resin-impregnated fiber layers may be variously sized and oriented. For example, the fibers may be oriented radially away from, axially along, or circumferentially relative to the axis of rotation of the beads 13. All or a portion of the fibers may be cylindrical, rectangular, triangular, etc. Fibers may be 10.0 mm in length up to the entire circumference of the beads 13. Cross-sectional areas of the fibers may also be constant or vary. The relationship between the fibers and resin may be such that the beads 13 and/apexes 61 may withstand extreme stresses occurring during the tire's operation and maximum service life.

The bead construction in accordance with this invention allows the manufacture of lighter tire compared to steel bead at equal strength. It also allows to reduce the bead size at equal strength. The bead construction in accordance with this invention also gives the tire designer a new degree of freedom in tire design. Finally, the bead construction in accordance with this invention may improve rolling resistance of the tire.

## Claims

1. A tire comprising a tread (20) extending circumferentially around an outer portion of the pneumatic tire, two sidewalls extending radially inward from the tread, a carcass ply (88) extending radially inward through each sidewall, and two annular bead portions (13) comprising a composite material comprising resin-impregnated fabric or fiber layers.

2. The tire of claim 1 wherein the composite material comprises or is constructed of the resin-impregnated fabric or fiber layers, the layers including a resin, a hardener, an accelerator, and fibers.

3. The tire of claim 1 or 2, wherein the two annular bead portions (13) secure radially inner portions of the carcass ply (88).

4. The tire of at least one of the previous claims, further comprising two apexes (61) respectively extending radially outward from each bead portion (13).

5. The tire of at least one of the previous claims, wherein the fibers are or comprise glass fibers or carbon fibers.

6. The tire of at least one of the previous claims, wherein the fibers comprise both glass fibers and carbon fibers.

7. The tire of at least one of the previous claims, wherein the apexes (61) comprise a composite material constructed of resin-impregnated fabric layers.

8. The tire of claim 7 wherein the apexes (61) comprise a composite material comprising or constructed of resin-impregnated fabric or fiber layers.

9. The tire of claim 8 wherein the resin-impregnated fabric or fiber layers include a resin, a hardener, an accelerator, and fibers such as glass and/or carbon fibers.

10. The tire of at least one of the previous claims, wherein each bead portion (13) comprises an integral structure with an associated apex (61).

11. The tire of at least one of the previous claims, wherein the fibers have circular, rectangular or triangular cross-sections.

12. The tire of at least one of the previous claims, wherein the fibers are oriented radially, axially or circumferentially.

13. The tire of at least one of the previous claims, wherein the tire is a pneumatic tire.

14. A method of making a tire in accordance with at least one of the previous claims, the method comprising:
preparing a liquid component mixture comprising a resin, a hardener, an accelerator and fibers;
forming uncured bead portions and/or uncured apexes or an uncured integral structure using said liquid component.

15. The method of claim 14 wherein the resin-impregnated fabric or fiber layers are manufactured into a final shape of the bead portions (13) and/or wherein the resin-impregnated fabric or fiber layers are cut and placed one above the other into a mold that corresponds to the dimensions of the bead portions (13).
